# EUROPEAN PATENT APPLICATION

(11) **EP 4 651 018 A2**
(43) Date of publication of application: **19.11.2025**
(21) Application number: 25175682.1
(22) Date of filing: 12.05.2025
(51) Int. Cl.: G06K 15/02, G06K 15/12, G06F 3/12, H04N 1/21, H04N 1/387, G06F 12/00

(54) **DATA PROCESSING DEVICE, IMAGE FORMING APPARATUS, IMAGE PROCESSING PROGRAM, AND COMPUTER PROGRAM FOR CONDITIONALY CREATING A GRAPHIC IMAGE CONTAINING CHARACTER**

(30) Priority: 15.05.2024 JP 2024079421; 15.05.2024 JP 2024079419
(71) Applicant: KYOCERA Document Solutions Inc., Osaka-shi, Osaka 540-8585 (JP)
(72) Inventor: DEIPARINE, Anthony, Osaka-shi, Osaka, 540-8585 (JP)
(74) Representative: Herrero & Asociados, S.L.

(57) **Abstract**

An image forming apparatus includes a character drawer (114) and a storage device (115). The character drawer (114) creates a graphic image of a character contained in print data. The storage device (115) stores the graphic image created by the character drawer (114). When the graphic image of the character is absent in the storage device (115), the character drawer (114) creates a graphic image of the character and allows the created graphic image to be stored in the storage device (115).

## Description

### BACKGROUND

The present invention relates to data processing devices, image forming apparatuses, image processing programs, and computer programs.

An image forming apparatus, such as a copier or a printer, prints an image on a paper sheet according to print data received from an external device, such as a personal computer, or print data based on an image of an original document acquired by a scanner. In printing characters in the print data, the image forming apparatus may create graphic images (bitmap images) of the characters in the font used and prints the graphic images.

It takes time to create graphic images of characters in the font used. Therefore, generally, graphic images of the font of characters are stored in a font cache memory. When graphic images of a font of frequently used characters are stored in a font cache memory, the time and effort taken to create graphic images can be reduced to shorten the printing time.

For example, there is proposed a font cache mechanism for determining which character is to be placed at the top of a character list for character graphic images based on the frequency of use of the character. For another example, there is proposed a method for determining whether or not to store a graphic image of a character in a font cache memory based on the language in which the character has been created.

For still another example, there is proposed a method in which a graphic image of a character is stored in a font cache memory of a device based on the language setting of the device and the frequency of use of the character. For still another example, there is proposed a method in which a character width cache is designed to be used in combination with a Unicode character, phonographic characters are assigned to a lower subrange of character codes, and ideographic characters are assigned to an upper subrange of character codes.

Furthermore, there is also proposed a method for dividing a font cache memory into blocks and gradually expanding the font cache memory for the purpose of preventing unnecessary memory allocation.

### SUMMARY

A technique improved over the aforementioned techniques is proposed as one aspect of the present invention.

A data processing device according to an aspect of the present invention includes a control device and a storage device. The control device includes a processor and functions, through the processor executing an image processing program, as a character drawer that creates a graphic image of a character contained in print data. The storage device stores the graphic image created by the character drawer. When the graphic image of the character is absent in the storage device, the character drawer creates a graphic image of the character and allows the created graphic image to be stored in the storage device.

A non-transitory computer-readable recording medium according to another aspect of the present invention stores an image processing program. The image processing program allows a processor to operate as a surrogate pair determiner, a font cache memory, a character drawer, and a font cache controller. The surrogate pair determiner sets one of characters contained in print data as a target character and detects whether or not the target character is a surrogate pair-enabled character. The font cache memory includes a primary font cache, a secondary font cache having a lower read and write speed than the primary font cache, and a tertiary font cache having a lower read and write speed than the secondary font cache and stores graphic images of the characters. The character drawer creates a graphic image of the target character of a font. The font cache controller controls reading and writing from and to the font cache memory. The font cache controller searches the font cache memory for the graphic image of the target character of the font and reads the graphic image from the font cache memory. When the graphic image of the target character is absent in the font cache memory, the font cache controller allows the character drawer to create a graphic image of the target character of the font. When the target character is not a surrogate pair-enabled character or when the target character is a surrogate pair-enabled character having a high surrogate of a predetermined value, the font cache controller allows the graphic image of the target character of the font to be stored into the primary font cache.

A non-transitory computer-readable recording medium according to still another aspect of the present invention stores a computer program. The computer program allows a processor to operate as a rasterizer. When a to-be-drawn character as a subject to be drawn in a text document has a common component shared by a plurality of composite glyphs and first raster data representing the common component is absent in a component storage area included in a storage device, the rasterizer creates the first raster data using the to-be-drawn character and stores the first raster data into the component storage area. When the first raster data is already stored in the component storage area, the rasterizer creates second raster data representing a non-common component of the to-be-drawn character, combines the first raster data with the second raster data to create a font cache showing the to-be-drawn character, and stores the font cache into a font cache storage area included in the storage device.

### BRIEF DESCRIPTION OF THE DRAWINGS

FIG. 1 is a front cross-sectional view showing the structure of an image forming apparatus according to a first embodiment.
FIG. 2 is a diagram showing an electric configuration of the image forming apparatus according to the first embodiment.
FIG. 3 is a flowchart showing the flow of processing for accessing a font cache memory.
FIG. 4 is a block diagram showing an electric configuration of an image forming apparatus according to a second embodiment.
FIG. 5 is a view showing an example of a piece of information registered in a reference table.
FIG. 6 is a view showing another example of a piece of information registered in the reference table.
FIG. 7 is a flowchart showing font rasterization processing.
FIG. 8 is a flowchart showing first raster data storage processing.
FIG. 9 is a view showing an example of a method for extracting a common component.
FIG. 10 is a view showing how first raster data is stored.
FIG. 11 is a view showing how the coordinate of a starting point is registered.
FIG. 12 is a view showing how a font cache is created.

### DETAILED DESCRIPTION

### [First Embodiment]

Hereinafter, a description will be given of an image forming apparatus according to one embodiment of the present invention with reference to the drawings. An image forming apparatus according to this embodiment is, for example, a printer, a copier or a multifunction peripheral having multiple functions, including not only a printer and a copier but also a facsimile machine, a scanner or so on.

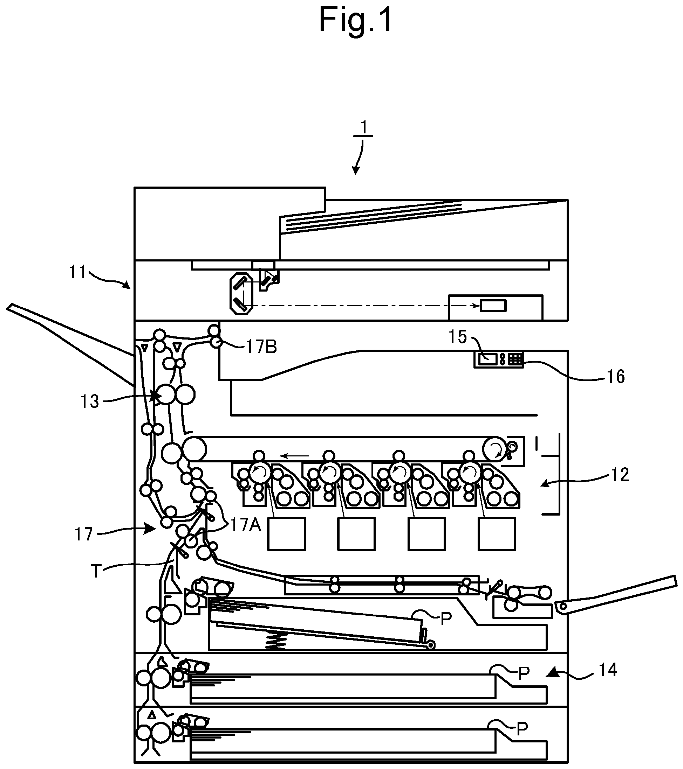

FIG. 1 is a front cross-sectional view showing the structure of an image forming apparatus 1. Referring to FIG. 1, the image forming apparatus 1 is a multifunction peripheral having multiple functions, including a copy function, a data transmission function, a print function, a facsimile function, and so on.

A housing of the image forming apparatus 1 contains an image reading device 11, an image forming device 12, a fixing device 13, a sheet feed device 14, and so on.

The image reading device 11 reads an image of an original document while moving the original document or with the original document set in place, and generates image data from the read image.

The image forming device 12 includes a photosensitive drum, a charging device, an exposure device, a developing device, and an image transfer device. The image forming device 12 forms, based on the image data, an image formed of a toner image on a paper sheet P being conveyed along a conveyance path T.

The fixing device 13 applies heat and pressure to the paper sheet P with the toner image formed thereon by the image forming device 12, thus fixing the toner image on the paper sheet P. The paper sheet P with the toner image fixed thereon is ejected to a sheet output tray.

The sheet feed device 14 includes a manual feed tray and a plurality of sheet feed cassettes. The sheet feed device 14 pulls out paper sheets P contained in any of the plurality of sheet feed cassettes or paper sheets put on the manual feed tray sheet by sheet with a pickup roller and feeds the pulled-out sheet to the conveyance path T.

The display device 15 is a display device including a liquid crystal display or an organic EL (organic light-emitting diode) display. The display device 15 displays various types of screens.

An operation device 16 includes a plurality of hard keys and a touch panel superposed on the display device 15. The operation device 16 accepts an input of an instruction from a user.

A conveyance device 17 includes a conveyance roller pair 17A, a conveyance roller pair 17B, and a conveyance motor. A controller 110 drives the conveyance motor to rotate the conveyance roller pair 17A and the conveyance roller pair 17B, thus allowing a paper sheet P to be conveyed along the conveyance path T.

A power supply is connected to each of the components of the image forming apparatus 1. When the power supply is turned on by the user, power is supplied from the power supply to each component of the image forming apparatus 1.

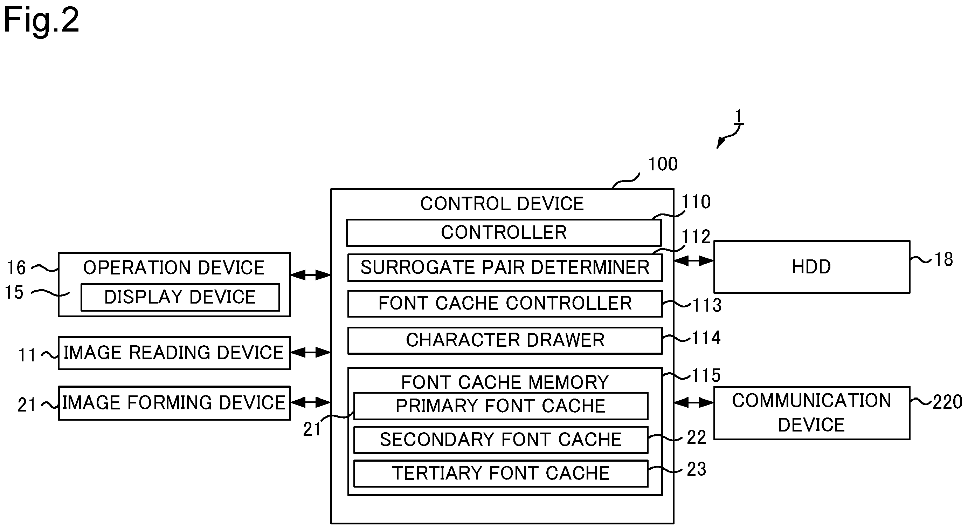

FIG. 2 is a diagram showing an electric configuration of the image forming apparatus 1 according to the first embodiment. The image forming apparatus 1 includes a control device 100, the operation device 16, the image reading device 11, the image forming device 12, an HDD 18, a communication device 220, and so on. The image forming apparatus according to this embodiment uses Unicode as a character code.

The operation device 16 includes hard keys, such as a decision key for giving a definite instruction for various operations and settings and a start key, and the display device 15. The display device 15 displays an operation screen, a message, and so on. The display device 15 may be formed integrally with the touch panel.

The image reading device 11 includes a scanner and so on and reads an image of an original document to acquire image data on the original document. The image forming device 12 prints on a paper sheet according to print data acquired by the image reading device 11 or print data received by the communication device 220 from an external device or so on.

The HDD 18 is a large-capacity storage device that stores image data, various programs, data tables, and so on. The communication device 220 is constituted by a communication module or the like and transfers various types of data to and from external devices, such as a server, via a network.

The control device 100 is composed of a processor, a RAM (random access memory), a ROM, and so on. The processor is, for example, a CPU (central processing unit), an MPU (micro processing unit) or an ASIC (application specific integrated circuit). When the processor executes an image processing program stored in the ROM or the like, the control device 100 functions as a controller 110, a surrogate pair determiner 112, a font cache controller 113, and a character drawer 114. The controller 110 governs the overall operation control of the image forming apparatus 1.

The image forming apparatus 1 prints an image on a paper sheet according to print data received from an external device or print data based on an image of an original document acquired by the scanner. In printing characters on the paper sheet, the character drawer 114 executes processing (rasterization) for converting the font of the characters to bitmap images (graphic images). This rasterization processing takes time. Therefore, as needed, a font cache memory 115 stores bitmap images created by the character drawer 114. By doing so, the controller 111 can promptly read the bitmap images of characters from the font cache memory 115, which enables reduction of the printing time.

An example of a character encoding scheme defined by Unicode is UTF-16. UTF-16 basically represents a single character in two bytes, but, as for some characters, represents a combination of two characters in four bytes. Such a character constituted by a combination of characters represented in four bytes is referred to as a surrogate pair (or a surrogate pair-enabled character). A surrogate pair is composed of a high surrogate (two bytes) and a low surrogate (two bytes). In UTF-16, the code range of high surrogates is from 0×D800 to 0×DBFF and the code range of low surrogates is 0×DC00 to 0×DFFF. Surrogate pair-enabled characters are infrequently used characters.

Regarding each character contained in print data, the surrogate pair determiner 112 determines, based on the character code of the character corresponding to two bytes, whether or not the character is a surrogate pair-enabled character. Then, the font cache controller 113 searches the font cache memory 115 for a bitmap image of the font of the character. When the bitmap image is stored in the font cache memory 115, the font cache controller 113 reads the bitmap image from the font cache memory 115.

When a bitmap image of the font of the character is not stored in the font cache memory 115, the character drawer 114 creates a bitmap image thereof and the font cache memory 115 stores the created bitmap image in one of a primary font cache 21, a secondary font cache 22, and a tertiary font cache 23 depending on the determination result of the surrogate pair determiner 112.

The font cache memory 115 is a cache memory that stores bitmap images of characters and includes the primary font cache 21, the secondary font cache 22, and the tertiary font cache 23. The descending order of the read/write speed of the above three caches is the primary font cache 21, the secondary font cache 22, and the tertiary font cache 23.

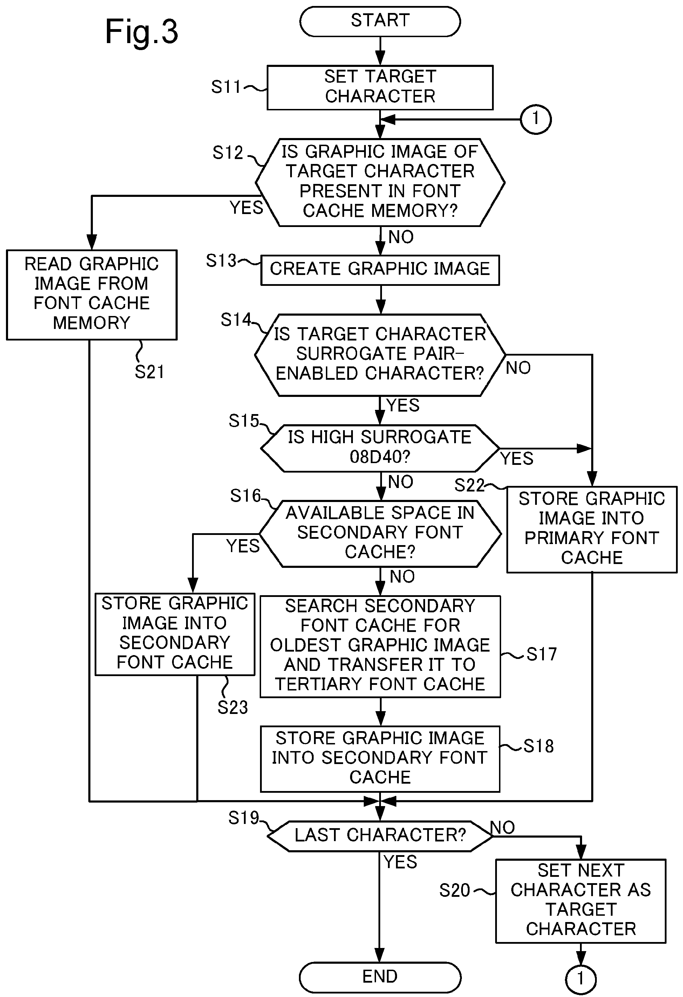

FIG. 3 is a flowchart showing the flow of processing for accessing the font cache memory 115 in this embodiment. The font cache controller 113 sets a first character contained in print data as a target character (S11) and searches the font cache memory 115 for a bitmap image of the target character (S12).

When a bitmap image of the target character is stored in the font cache memory 115 (YES in S12), the font cache controller 113 reads the bitmap image from the font cache memory 115 (S21). Furthermore, when the target image is also the last character in the print data (YES in S19), the font cache controller 113 ends the processing. On the other hand, when the target character is not the last character in the print data (NO in S19), the font cache controller 113 sets the next character in the print data as a target character (S20) and goes to the processing in S12.

When a bitmap image of the target character is absent in the font cache memory 115 (NO in S12), the character drawer 114 creates a bitmap image of the font of the target character (S13). Then, the surrogate pair determiner 112 determines whether or not the target character is a surrogate pair-enabled character. When the target character is not a surrogate pair-enabled character (NO in S14) or when the target character is a surrogate pair-enabled character (YES in S14) and its high surrogate has a predetermined value (for example, 0×8D40) (YES in S15), the font cache controller 113 allows the bitmap image created by the character drawer 114 to be stored into the primary font cache 21 (S22). Then, the font cache controller 113 goes to the processing in S19.

In this case, in this embodiment, the font cache controller 113 allows the surrogate pair-enabled character to be stored into the primary font cache 21 only when the high surrogate is 0x8D40. However, the predetermined value of a high surrogate may be able to be changed depending on the frequently used characters or other factors.

When the target character is a surrogate pair-enabled character (YES in S14), but its high surrogate does not have the predetermined value (0x8D40) (NO in S15), the font cache controller 113 determines whether or not the secondary font cache 22 can accommodate the bitmap image (S16). When determining that the secondary font cache 22 can accommodate the bitmap image (YES in S16), the font cache controller 113 allows the bitmap image to be stored into the secondary font cache 22 (S23). Thereafter, the processing goes to S19.

When determining that the secondary font cache 22 cannot accommodate the bitmap image (NO in S16), the font cache controller 113 retrieves a least recently accessed bitmap image from the secondary font cache 22 and transmits the retrieved bitmap image to the tertiary font cache 23 (S17). Then, the font cache controller 113 deletes the bitmap image subjected to the transmission from the secondary font cache 22 and stores the bitmap image created by the character drawer 114 into the secondary font cache 22 (S18). Thereafter, the processing goes to S19.

If a large number of bitmap images of characters could be stored in the primary font cache 21, the time for printing could be efficiently reduced. However, to do this, the primary font cache needs to have a large enough capacity to accommodate such a large number of bitmap images, resulting in high cost. In this embodiment, as described above, what is stored in the primary font cache 21 is only the bitmap images of characters represented in two bytes and the bitmap images of characters represented in four bytes and having a high surrogate of a predetermined value (0x8D40), which eliminates the need for a large-capacity primary font cache.

Furthermore, in this embodiment, when the secondary font cache 22 has no available space, the least recently accessed bitmap image is transferred from the secondary font cache 22 to the tertiary font cache 23 and the created bitmap image is stored into the secondary font cache 22. In this manner, infrequently used bitmap images can be moved from the secondary font cache 22 to the tertiary font cache 23 and the bitmap images of many recently used characters can be stored into the secondary font cache 22.

In Unicode as a coded character set standard, two-byte data is basically used per character and the method of representing one character in four bytes constituted by a combination (a surrogate pair) of one of once-unused codes 0×D800 to 0×DBFF (high surrogates) and one of once-unused codes 0×DC00 to 0×DFFF (low surrogates) is adopted. However, the use of character codes in four bytes is not applied to the techniques described in BACKGROUND. Unlike those techniques, in this embodiment, graphic images of the character font shown by character codes in two bytes and character codes in four bytes can be efficiently stored into the font cache memory.

### [Second Embodiment]

An image forming apparatus 1 according to a second embodiment includes the same structure as the image forming apparatus 1 shown in FIG. 1. However, the image forming apparatus 1 according to the second embodiment has the following different configuration and functions. In other words, different contents of the following configuration from those shown in the first embodiment are configuration contents specific to the second embodiment. In the second embodiment, the image forming apparatus 1 is an example of the data processing device defined in CLAIMS.

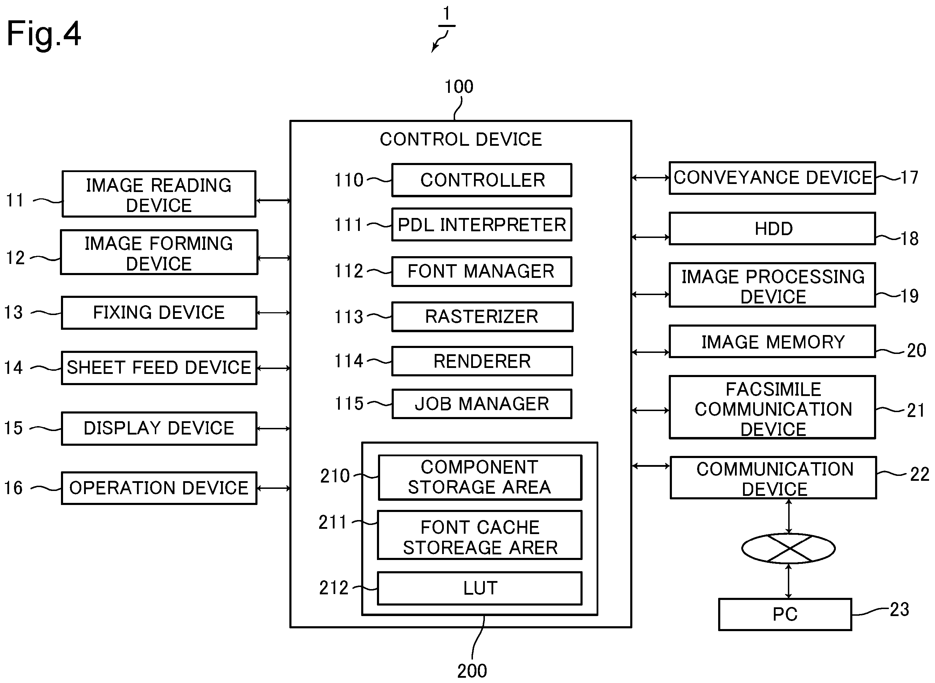

A description will be given of the configuration of the image forming apparatus 1 according to the second embodiment. FIG. 4 is a block diagram showing the configuration of the image forming apparatus 1 according to the second embodiment. The image forming apparatus 1 includes a control device 100. The control device 100 includes a processor, a RAM (random access memory) 200, and a ROM. The processor is, for example, a CPU (central processing unit), an MPU (micro processing unit) or an ASIC (application specific integrated circuit). The control device 100 functions as a data processing device defined in CLAIMS.

When the processor executes various kinds of computer programs stored in the ROM built in the control device 100 or stored in an HDD (hard disk drive) 18, the control device 100 functions as a controller 110, a PDL interpreter 111, a font manager 112, a rasterizer 113, a renderer 114, and a job manager 115. The controller 110 governs the overall control of the image forming apparatus 1.

In this embodiment, the PDL (page description language) interpreter 111 interprets PDL data. When the PDL data contains a text document, the PDL interpreter 111 requests the font manager 112 and the rasterizer 113 to start to execute font rasterization processing according to this embodiment.

The term "text document" refers to a document file free of graphics and photos (i.e., composed only of a text). The details of the font rasterization processing according to this embodiment will be described hereinafter.

The font manager 112 and the rasterizer 113 execute font rasterization processing according to this embodiment, thus creating a font cache showing a to-be-drawn character, which is a subject to be drawn, contained in the text document or outlining a to-be-drawn character in the text document to create an object.

The renderer 114 draws, according to a drawing instruction contained in the PDL data, characters in the text document using font caches or objects created by the font rasterization processing according to this embodiment, thus generating image data on the characters.

The job manager 115 executes a predetermined job, such as a print job or a send job, on the image data generated by the renderer 114.

In this embodiment, the characters contained in the text document are assumed to be of an outline font. A piece of character data on each character of an outline font contains in its header, for example, a character code, a type style, a character size, shape data indicating the outline, component information, and so on.

These pieces of information contained in each piece of character data are registered in the piece of character data, for example, by a font designer when creating the outline font.

The character code refers to, for example, a code created based on the Unicode CJK (Chinese, Japanese, Korean) Unified Ideographs. The type style refers to a font type, such as TrueType or OpenType. The outline refers to a line forming a closed shape by connecting coordinates.

The component information contains information for identifying components constituting the character. The component information contains, for example, a maxp (maximum profile) table. The maxp table indicates the maximum values of various parameters for use in drawing the character. For example, the maxp table indicates the maximum number of points required to draw each component, the maximum number of outlines required to draw the component, and so on.

Each of the functional components, such as the controller 110, of the control device may not be implemented by the operation in accordance with a computer program, but may be configured to be operable by a logic circuit or may have a structure implementable by two or more control devices.

The RAM 200 is used as a working memory. The RAM 200 includes a component storage area 210 and a font cache storage area 211. The component storage area 210 stores raster data on common components each shared by a plurality of composite glyphs (hereinafter, raster data on a common component is referred to as "first raster data"). The font cache storage area 211 stores font caches showing to-be-drawn characters as subjects to be drawn.

The RAM 200 further stores a reference table (hereinafter, referred to as a "LUT (look up table)" 212 for use in referring information on common components occupied by characters in the text document. The LUT 212 includes, for each character of a composite glyph, a character code, the ID of a common component, the number of outlines of the common component, and the coordinates of one or more starting points of the common component, which are registered therein in association with each other.

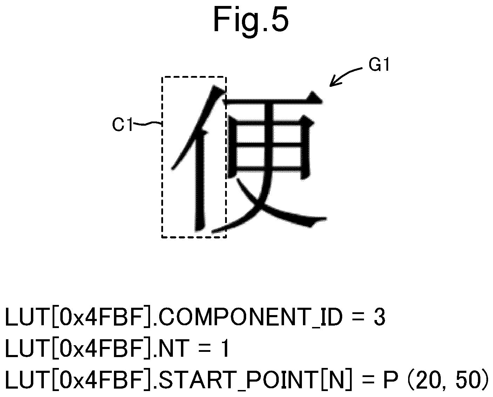

For example, as shown in FIG. 5, the LUT 212 includes, as for a composite glyph G1 " 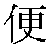 ", a character code "0×4FBF", "3" indicating the ID of a common component C1 corresponding to a kanji radical "ninben", "1" indicating the number of outlines of the common component C1, and "(20, 50)" indicating the coordinate of the starting point of the outline, which are registered therein in association with each other.

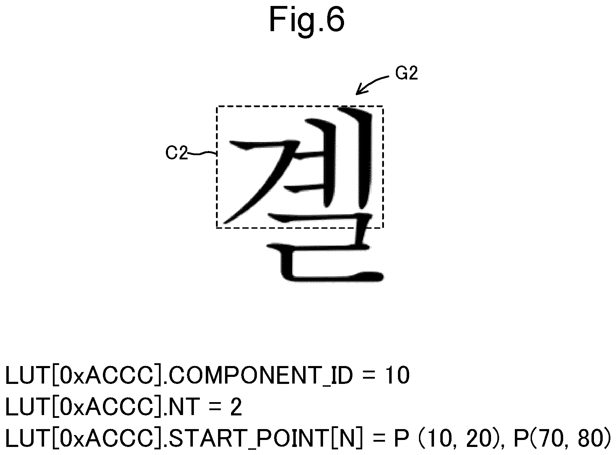

For another example, as shown in FIG.6, the LUT 212 includes, as for a composite glyph G2 " 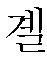 ", a character code "0×ACCC", "10" indicating the ID of a common component C2 corresponding to a hangul element " 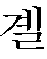 ", "2" indicating the number of outlines of the common component C2, and "(10, 20),(70, 80)" indicating the respective coordinates of the starting points of the two outlines, which are registered therein in association with each other.

Each common component is uniquely assigned an ID. A single glyph having no common component is assigned "0" as its ID. In other words, a character having an ID indicating "0" is a single glyph, while a character having an ID indicating a value other than "0" is a composite glyph.

When PDL data contains a text document, the font manager 112 acquires, as for each character of a composite glyph, the ID of a common component and the number of outlines of the common component from the piece of character data on the character of an outline font in the text document and registers them in the LUT 212.

The rasterizer 113 registers, for each composite glyph having a common component indicated by first raster data, the coordinates of the starting points of one or more outlines constituting the common component into the LUT 212 upon storage of the first raster data into the component storage area 210. In other words, the starting points' coordinates of the one or more outlines registered in the LUT 212 provide, regarding each composite glyph, information indicating that first raster data is stored in the component storage area 210.

The control device 100 is electrically connected to the image reading device 11, the image forming device 12, the fixing device 13, the sheet feed device 14, the display device 15, the operation device 16, the conveyance device 17, the HDD 18, an image processing device 19, an image memory 20, a facsimile communication device 21, a communication device 22, and so on.

The HDD 18 stores image data generated by the image reading device 11, various computer programs for use in realizing operations of the image forming apparatus 1, and so on. The HDD 18 stores, as one of the above various computer programs, a rasterization program for use in executing the font rasterization processing according to this embodiment.

The HDD 18 stores font caches previously created by the rasterizer 113. The font caches are loaded into the font cache storage area 211 at the start-up of the image forming apparatus 1.

The image processing device 19 is an image processing circuit that executes image processing as necessary on the image data generated by the image reading device 11. The image memory 20 temporarily stores the image data generated by the image reading device 11.

The facsimile communication device 21 sends and receives image data via a public line. The communication device 22 includes a communication module, such as a LAN (local area network) board. The controller 100 performs data communications through the communication device 22 with external devices, such as a PC (personal computer) 23, connected via a network.

### [Operation]

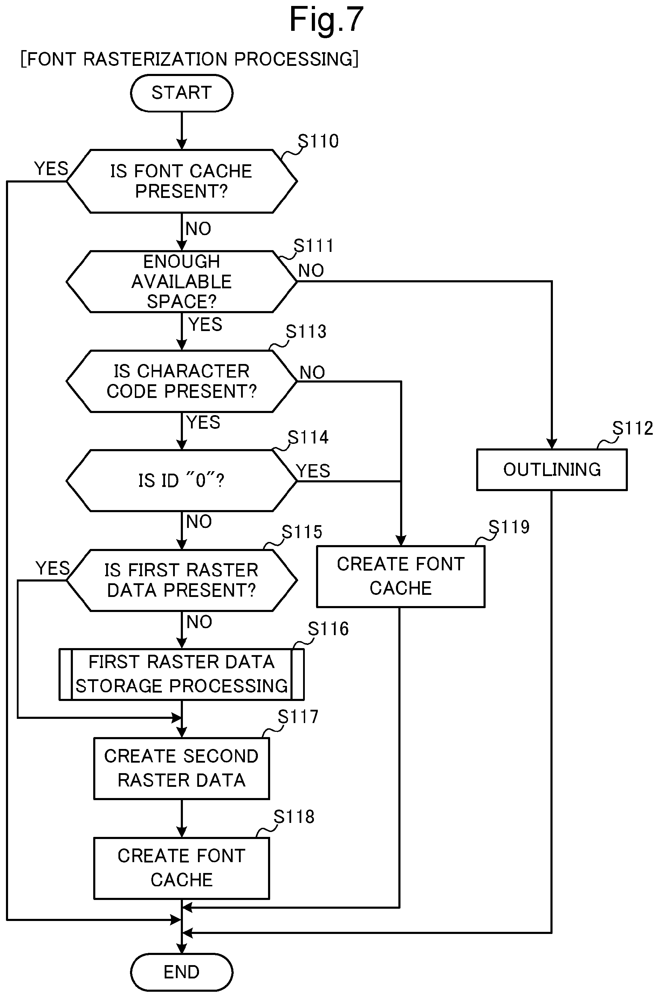

Hereinafter, a description will be given of the operation of the image forming apparatus 1 when executing the font rasterization processing according to this embodiment with reference to FIGS. 7 to 12 and so on.

Assume that a user has operated the PC 23 to create a text document and input an instruction to print the text document. The PC 23 creates a print job containing PDL data with a printer driver included in the PC 23 and sends the print job to the image forming apparatus 1.

When the communication device 22 of the image forming apparatus 1 receives the print job, the PDL interpreter 111 interprets the PDL data. When determining that the PDL data contains a text document, the PDL interpreter 111 requests the font manager 112 and the rasterizer 113 to register necessary information into the LUT 212 and start to execute the font rasterization processing.

When accepting the request to register necessary information into the LUT 212, the font manager 112 acquires, from character data on the outline font characters in the text document, respective character codes and pieces of component information on the characters (in this case, the IDs of common components and the numbers of outlines of the common components) and registers them into the LUT 212.

### [Font Rasterization Processing]

Referring to FIG. 7, when accepting the request to start to execute the rasterization processing, the font manager 112 determines a to-be-drawn character from a plurality of characters in the text document and determines whether or not a font cache showing the to-be-drawn character is stored in the font cache storage area 211 (step S110).

When the font manager 112 determines that a font cache showing the target character is stored in the font cache storage area 211 (YES in step S110), this means that there is no need to create a font cache and, therefore, the font rasterization processing ends.

On the other hand, when the font manager 112 determines that a font cache showing the to-be-drawn character is absent in the font cache storage area 211 (NO in step S110), the rasterizer 113 determines, with reference to the usage of the RAM, the maxp table, and so on, whether or not the working memory has an available space enough to rasterize the to-be-drawn character (step S111).

When determining that the working memory does not have an available space enough to rasterize the to-be-drawn character (NO in step S111), the rasterizer 113 outlines the to-be-drawn character to create an object representing the to-be-drawn character (step S112). After the processing in step S112, the rasterizer 113 ends the font rasterization processing.

Thus, it can be avoided that although the working memory does not have an available space enough to rasterize the to-be-drawn character, the to-be-drawn character is subjected to rasterization and, as a result, an error due to a lack of memory occurs.

On the other hand, when determining that the working memory has an available space enough to rasterize the to-be-drawn character (YES in step S111), the rasterizer 113 determines whether or not the character code of the to-be-drawn character is registered in the LUT 212 (step S113).

When determining that the character code of the to-be-drawn character is registered in the LUT 212 (YES in step S113), the rasterizer 113 determines whether or not the ID associated with the character code of the to-be-drawn character is "0" (step S114).

When determining that the ID associated with the character code of the to-be-drawn character is a value other than "0" (NO in step S114), i.e., when the to-be-drawn character is a character classified as a composite glyph, the rasterizer 113 determines whether first raster data on the common component is stored or not (present or absent) in the component storage area 210 (step S115).

### (1) The case where first raster data is absent

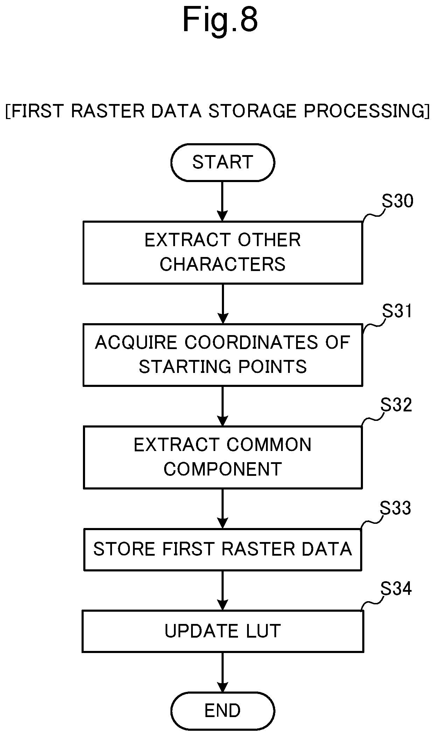

When the starting point's coordinate of the common component supposed to be associated with the character code of the to-be-drawn character is not registered in the LUT 212, the rasterizer 113 determines that the first raster data on the common component is absent (NO in step S115) and starts to execute first raster data storage processing shown in FIG. 8 (step S116).

### [First Raster Data Storage Processing]

When the execution of the first raster data storage processing is started, the rasterizer 113 first refers to the respective pieces of component information contained in the pieces of character data on the characters in the text document and extract all other characters having the same component as the to-be-drawn character from the text document (step S30).

In this case, assume that the rasterizer 113 has extracted characters " 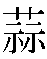 " " 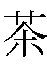 ", and " 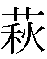 " as the other characters having the same component as the to-b drawn character " 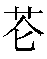 " from the text document.

After the processing in step S30, the rasterizer 113 acquires the respective coordinates of the starting points (in this case, the top left ends in the figure) of the outlines of all the components that each of the to-be-drawn character and the extracted other characters has (step S31).

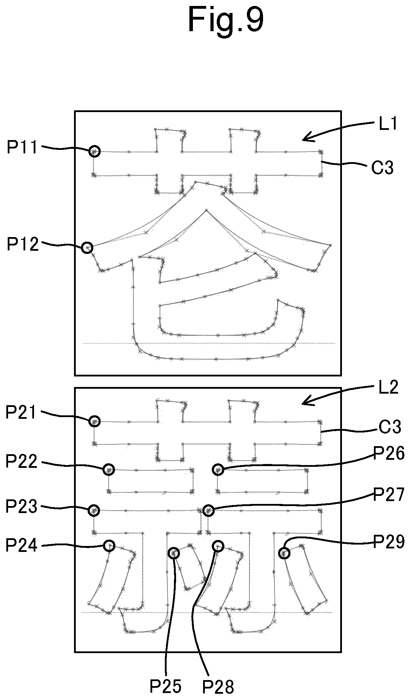

For example, as shown in FIG.9, the rasterizer 113 acquires, as for the to-be-drawn character L1 " 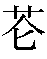 ", the coordinates P11, P12 of the starting points of the outlines of two components that the character L1 has. Furthermore, the rasterizer 113 acquires, as for the character L2 " 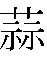 ", the coordinates P21 to P29 of the starting points of the outlines of nine components that the character L2 has.

After the processing in step S31, the rasterizer 113 extracts, based on the acquired coordinates of the starting points, components having a common starting point's coordinate among the to-be-drawn character and the extracted other characters as a common component (step S32).

In this case, the rasterizer 113 extracts, based on the acquired coordinates P11, P12, P21 to P29, and so on of the starting points, components having a common starting point's coordinate P11, P21, and so on and representing a kanji radical "kusakanmuri" as a common component C3. The rasterizer 113 does not extract non-common components having no common starting point's coordinate.

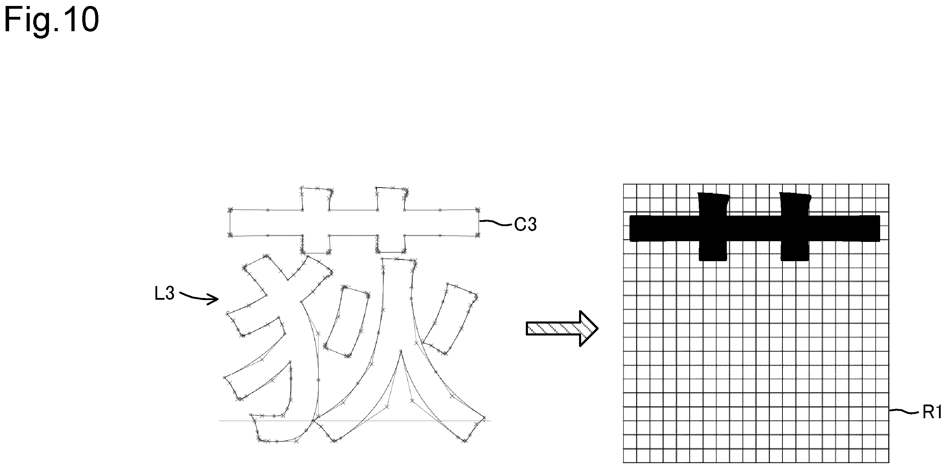

After the processing in step S32, the rasterizer 113 creates first raster data representing the extracted common component and stores the created first raster data into the component storage area 210 (step S33). For example, as shown in FIG. 10, the rasterizer 113 creates first raster data R1 representing the common component C3 and stores it into the component storage area 210. The first raster data R1 is a bitmap image having a size within which the whole of the character L3 composed of a composite glyph can be drawn.

After the processing in step S33 the rasterizer 113 registers, as for each of the characters (each of " 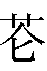 ", " 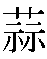 ", " 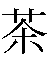 ", and " 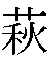 " in this case) having the extracted common component in the text document, the acquired coordinate of the starting point into the LUT 212 to show that the first raster data is stored in the component storage area 210, thus updating the LUT 212 (step S34).

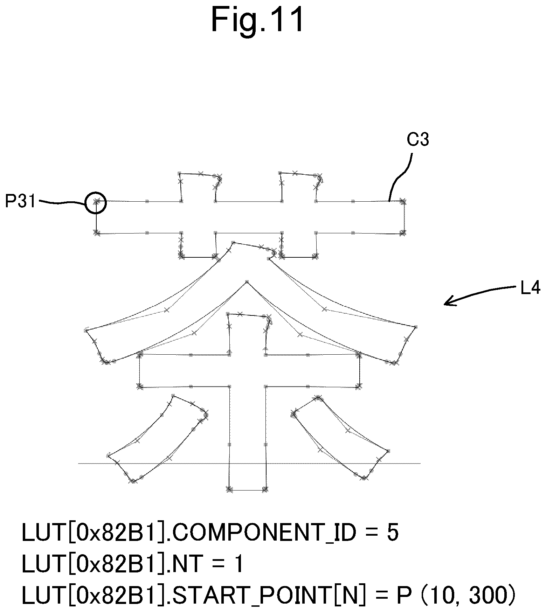

For example, as shown in FIG. 11, the rasterizer 113 registers, into the LUT 212, "(10, 300)" indicating the coordinate of the starting point P31 of the common component C3 in association with a character code "0×82B1" of the character L4 " 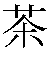 ". After the processing in step S34, the rasterizer 113 ends the first raster data storage processing.

Referring again to FIG.7, after the first raster data storage processing in step S116, the rasterizer 113 creates second raster data representing a non-common component of the to-be-drawn character (step S117). In this case, the rasterizer 113 creates second raster data representing a non-common component other than the common component C3 in the to-be-drawn character L1 " 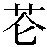 ".

When, in step S117, a font cache of the non-common component is already stored in the font cache storage area 211, the rasterizer 113 may create second raster data using the stored font cache.

After the processing in step S117, the rasterizer 113 copies and reads the first raster data (in this case, the first raster data R1) from the component storage area 210, combines the read first raster data with the created second raster data to create a font cache showing the to-be-drawn character, and stores the font cache into the font cache storage area 211 (step S118). After the processing in step S118, the rasterizer 113 ends the font rasterization processing.

### (2) The case where first raster data is stored

On the other hand, when the starting point's coordinate of the common component is registered in the LUT 212 in association with the character code of the to-be-drawn character, the rasterizer 113 determines that the first raster data on the common component is stored (YES in step S115) and executes the processing in step S117 and step S118, without executing first raster data storage processing in step S116.

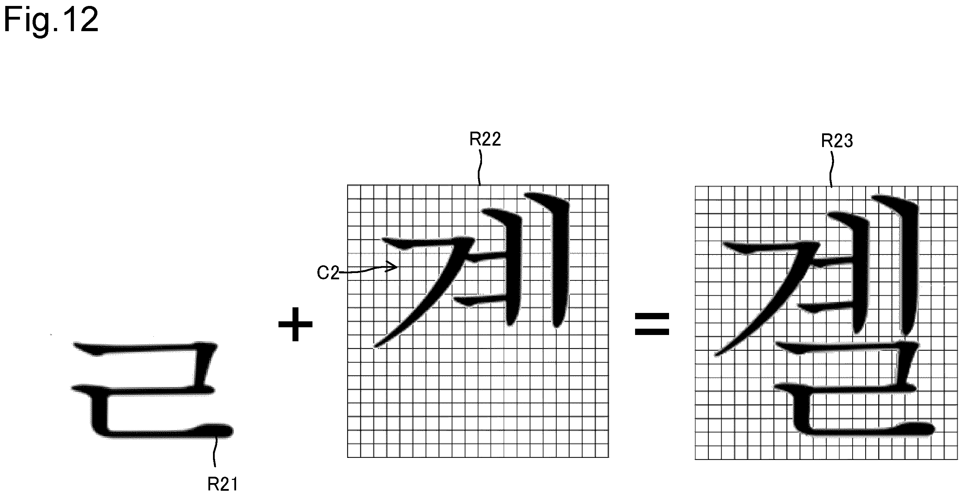

In this case, as shown in FIG.12, the rasterizer 113 creates second raster data R21 representing a non-common component of a to-be-drawn character " 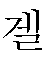 " in step S117. In step S118, the rasterizer 113 copies and reads first raster data R22 representing a common component C2 " 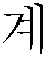 " from the component storage area 210.

The rasterizer 113 combines the first raster data R22 with the second raster data R21 to create raster data R23 representing the to-be-drawn character. The rasterizer 113 creates a font cache showing the to-be-drawn character, using the raster data R23 and the piece of character data on the to-be-drawn character, and stores the font cache into the font cache storage area 211.

When determining that a character code of the to-be-drawn character is not registered in the LUT 212 (NO in step S113), the rasterizer 113 directly creates a font cache showing the whole of the to-be-drawn character and stores the font cache into the font cache storage area 211 (step S119).

Thus, as for any to-be-drawn character unknown as to its components, a font cache showing the to-be-drawn character is directly created without the use of first raster data. As a result, it can be prevented that any character having a shape unintended by the font designer or the like is drawn.

Also when determining that the ID associated with the character code of the to-be-drawn character is "0" (YES in step S114), i.e., when the to-be-drawn character is a character classified as a single glyph, such as " 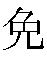 " or " 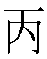 ", the rasterizer 113 executes the processing in step S119. After the processing in step S119, the rasterizer 113 ends the font rasterization processing.

When the font rasterization processing ends, the renderer 114 draws, according to a drawing instruction contained in the PDL data, characters in the text document using font caches stored in the font cache storage area 211 or created objects, thus generating image data on the characters. The job manager 115 allows the image forming device 12 and so on to form an image represented by the generated image data on a paper sheet P.

In the above embodiment, when a to-be-drawn character in a text document has a common component and first raster data on the common component is absent in the component storage area 210, the rasterizer 113 creates the first raster data using the to-be-drawn character and stores the first raster data into the component storage area 210. On the other hand, when the first raster data is already stored in the component storage area 210, the rasterizer 113 creates second raster data representing a non-common component of the to-be-drawn character, combines the first raster data with the second raster data to create a font cache showing the to-be-drawn character and stores the font cache into the font cache storage area 211.

As just described, in creating a font cache showing a character having a common component, already created first raster data is reused, which eliminates the need to rasterize the common component again. As a result, compared to the case where first raster data is created at each creation of a font cache showing another character having the common component, the time to rasterize characters classified as composite glyphs can be reduced. In addition, the shape of the common component can have consistency, which increases the character quality.

In the above embodiment, when the rasterizer 113 stores first raster data into the component storage area 210, it updates the LUT 212 to show that, as for each of composite glyphs having a common component represented by the first raster data, the first raster data is stored in the component storage area 210.

Thus, by referring to the LUT 212, whether or not first raster data is stored can be easily determined for each composite glyph. Therefore, the time taken to rasterize characters classified as composite glyphs can be further reduced.

In the above embodiment, the renderer 114 generates image data using font caches stored in the font cache storage area 210. Thus, the time taken to draw characters in a text document can be reduced.

Furthermore, in the above embodiment, the image forming apparatus 1 includes the control device 100 and the image forming device 12 that forms on a paper sheet P an image represented by image data generated by the renderer 114. Thus, the time taken for printing can be reduced and, therefore, the waiting time of the user can be reduced.

### (Modifications)

Although in the above embodiment the image forming apparatus 1 acquires a print job from the PC 23, the present invention is not limited to this embodiment. For example, the image forming apparatus 1 may acquire a print job through wireless communication from a mobile terminal, such as a smartphone. Alternatively, the image forming apparatus 1 may acquire a text document through a USB (universal serial bus) terminal from a USB memory and create a print job based on the text document.

Although in the above embodiment the job manager 115 allows the image forming device 12 and so on to form an image represented by generated image data on a paper sheet P, the present invention is not limited to this embodiment. For example, the job manager 115 may allow the HDD 18 to store the generated image data in accordance with a user's instruction received from the PC 23 or may send the generated image data through the facsimile communication device 21 or the communication device 22 to an external device.

Although in the above embodiment the control device 100 functioning as a data processing device is mounted on the image forming apparatus 1, the present invention is not limited to this embodiment. For example, the control device 100 functioning as a data processing device may be mounted on the PC 23.

Although in the above embodiment the rasterizer 113 copies and reads the first raster data R1 from the component storage area 210 in step S118, the present invention is not limited to this embodiment. For example, the rasterizer 113 may create a font cache of the to-be-drawn character by using directly the first raster data R1 stored in the component storage area 210, then create first raster data by deleting second raster data from raster data on the to-be-drawn character after the completion of a job by the job manager 115, and store the created first raster data into the component storage area 210 again.

There are known various techniques relating to processing for drawing a character. For example, a first technique is known in which a set of elements are used to create a set of two-dimensional distance fields and the set of two-dimensional distance fields are used to render a region of a composite glyph. For another example, a second technique is known in which a set of pixels relating to a region of a two-dimensional distance field are found, a set of components associated with each of the pixels are specified, and the anti-aliasing strength of each pixel on the associated component is determined.

Chinese, Japanese, Korean or like language includes, unlike alphabetic languages, a large number of characters classified as composite glyphs each having two or more components. In the case where a user does mass printing of a text document written in Chinese, Japanese, Korean or like language, a heavy load is imposed on font rasterization processing for characters as compared to mass printing of a text document written in characters each formed of a single glyph, such as alphabets. This presents a problem of a decrease in print speed. However, the first and second techniques described above are techniques relating mainly to rendering or anil-aliasing and, therefore, cannot solve the above problem.

Unlike the above, in the second embodiment, the time taken to rasterize characters classified as composite glyphs can be reduced and the quality of the characters can be increased.

Although in each of the above embodiments the image forming device 12 and so on form an image on a paper sheet P, the present invention is not limited to these embodiments. The image forming device 12 and so on may form an image, for example, on an OHP (overhead projector) sheet.

The present invention is not limited to the above embodiments and modifications and can be modified in various ways. For example, in the above embodiments, a multicolor multifunction peripheral is used as the image forming apparatus 1, this is merely illustrative and another type of image forming apparatus, such as a black-and-white multifunction peripheral, a copier or a facsimile machine, may be used.

The structures, configurations, and processing of the above embodiments described with reference to FIGS. 1 to 12 are merely illustrative of the present invention and are not intended to limit the present invention to them.

## Claims

1. A data processing device comprising:
a character drawer (114) that creates a graphic image of a character contained in print data; and
a storage device (115, 200) that stores the graphic image created by the character drawer (114),
wherein when the graphic image is absent in the storage device (115, 200), the character drawer (114) creates a graphic image of the character and allows the created graphic image to be stored in the storage device (115, 200).

2. The data processing device according to claim 1,
further comprising:
a surrogate pair determiner (112) that sets one of characters contained in the print data as a target character and detects whether or not the target character is a surrogate pair-enabled character; and
a font cache controller (113) that allows the storage device (115) to serve as a font cache memory (115) and controls reading and writing from and to the font cache memory (115),
wherein the font cache memory (115) comprises a primary font cache (21), a secondary font cache (22) having a lower read and write speed than the primary font cache (21), and a tertiary font cache (23) having a lower read and write speed than the secondary font cache (22) and stores graphic images of the characters,
the font cache controller (113) searches the font cache memory (115) for the graphic image of the target character of a font and reads the graphic image from the font cache memory (115),
when the graphic image of the target character is absent in the font cache memory (115), the character drawer (114) creates a graphic image of the target character of the font, and
when the target character is not a surrogate pair-enabled character or when the target character is a surrogate pair-enabled character having a high surrogate of a predetermined value, the font cache controller (113) allows the graphic image of the target character of the font to be stored into the primary font cache (21).

3. The data processing device according to claim 2, wherein
when the graphic image of the target character is absent in the font cache memory (115), the character drawer (114) creates a graphic image of the target character of the font, and
when the target character is a surrogate pair-enabled character having a high surrogate of a value other than the predetermined value, the font cache controller (113) allows the graphic image of the target character of the font to be stored into the secondary font cache (22).

4. The data processing device according to claim 3, wherein when the secondary font cache (22) fails to accommodate the graphic image created by the character drawer (114), the font cache controller (113) transmits an oldest graphic image from the secondary font cache (22) to the tertiary font cache (23), allows the tertiary font cache (23) to store the oldest graphic image, deletes the oldest graphic image from the secondary font cache (22), and allows the secondary font cache (22) to store the graphic image created by the character drawer (114).

5. The data processing device according to claim 2, wherein the predetermined value is 0xD840.

6. An image processing program allowing a processor to operate as:
a surrogate pair determiner (112) that sets one of characters contained in print data as a target character and detects whether or not the target character is a surrogate pair-enabled character;
a font cache memory (115) that comprises a primary font cache (21), a secondary font cache (22) having a lower read and write speed than the primary font cache (21), and a tertiary font cache (23) having a lower read and write speed than the secondary font cache (22) and stores graphic images of the characters;
a character drawer (114) that creates a graphic image of the target character of a font; and
a font cache controller (113) that controls reading and writing from and to the font cache memory (115),
the image processing program further allowing the processor to operate as:
the font cache controller (113) that searches the font cache memory (115) for the graphic image of the target character of the font and reads the graphic image from the font cache memory (115);
the font cache controller (113) that, in the absence of the graphic image of the target character in the font cache memory (115), allows the character drawer (114) to create a graphic image of the target character of the font; and
the font cache controller (113) that, when the target character is not a surrogate pair-enabled character or when the target character is a surrogate pair-enabled character having a high surrogate of a predetermined value, allows the graphic image of the target character of the font to be stored into the primary font cache (21).

7. The data processing device according to claim 1, wherein
the storage device (200) comprises a component storage area (210) and a font cache storage area (211),
the character drawer (114) functions as a rasterizer (113),
when a to-be-drawn character as a subject to be drawn in a text document has a common component shared by a plurality of composite glyphs and first raster data representing the common component is absent in the component storage area (210), the rasterizer (113) creates the first raster data using the to-be-drawn character and stores the first raster data into the component storage area (210), and
when the first raster data is already stored in the component storage area (210), the rasterizer (113) creates second raster data representing a non-common component of the to-be-drawn character, combines the first raster data with the second raster data to create a font cache showing the to-be-drawn character, and stores the font cache into the font cache storage area (211).

8. The data processing device according to claim 7,
further comprising a reference table (212) that shows, for each of the composite glyphs, whether or not the first raster data is stored in the component storage area (210),
wherein when the rasterizer (113) stores the first raster data into the component storage area (210), the rasterizer (113) updates the reference table (212) to show that, as for each of the composite glyphs having the common component represented by the first raster data, the first raster data is stored in the component storage area (210).

9. The data processing device according to claim 7, further comprising a renderer (114) that draws the characters in the text document using the font caches stored in the font cache storage area (211) to generate image data.

10. An image forming apparatus (1) comprising:
the data processing device according to claim 9; and
an image forming device (12) that forms, on a sheet, an image represented by the image data generated by the renderer (114).

11. A computer program allowing a processor to operate as a rasterizer (113), wherein
when a to-be-drawn character as a subject to be drawn in a text document has a common component shared by a plurality of composite glyphs and first raster data representing the common component is absent in a component storage area (210) included in a storage device (200), the rasterizer (113) creates the first raster data using the to-be-drawn character and stores the first raster data into the component storage area (210), and
when the first raster data is already stored in the component storage area (210), the rasterizer (113) creates second raster data representing a non-common component of the to-be-drawn character, combines the first raster data with the second raster data to create a font cache showing the to-be-drawn character, and stores the font cache into a font cache storage area (211) included in the storage device (200).
